# EUROPÄISCHE PATENTSCHRIFT

(11) **EP 1 853 659 B1**
(45) Veröffentlichungstag und Bekanntmachung des Hinweises auf die Patenterteilung: **14.10.2009**
(21) Anmeldenummer: 06707210.8
(22) Anmeldetag: 23.02.2006
(51) Int. Cl.: C08K 5/00

(54) **VERNETZBARE MASSEN AUF DER BASIS VON ORGANOSILICIUMVERBINDUNGEN**
CROSS-LINKABLE MASSES BASED ON ORGANOSILICON COMPOUNDS
MASSES POUVANT ETRE RETICULEES A BASE DE COMPOSES D'ORGANOSILICIUM

(30) Priorität: 03.03.2005 DE 102005009783
(43) Veröffentlichungstag der Anmeldung: 14.11.2007
(73) Patentinhaber: Wacker Chemie AG, 81737 München (DE)
(72) Erfinder: PRASSE, Marko, 01612 Glaubitz (DE)
(74) Vertreter: Budczinski, Angelika
(86) Internationale Anmeldenummer: PCT/EP2006/001653
(87) Internationale Veröffentlichungsnummer: WO 2006/092235

(56) Entgegenhaltungen:
- EP-A- 0 823 461
- EP-A- 0 931 811
- WO-A-95/05739
- US-A- 4 569 690
- US-A1- 2004 220 331

## Beschreibung

Die Erfindung betrifft vernetzbare Massen auf der Basis von Organosiliciumverbindungen, die Oxathiazine und/oder deren Derivate, insbesondere 3-Benzo(b)thien-2-yl-5,6-dihydro-1,4,2-oxathiazin-4-oxid, enthalten, Verfahren zu deren Herstellung sowie deren Verwendung.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie, eingesetzt. Insbesondere in Umgebungen mit hoher Luftfeuchtigkeit, wie zum Beispiel in Bädern, Küchen, aber beispielsweise auch tropischen Regionen, bildet sich auf der Oberfläche der Dichtmassen leicht ein Bewuchs mit Organismen, wie Pilzen oder auch Algen. Um dies zu verhindern, werden den Dichtmassen Fungizide zugesetzt, die den Bewuchs verhindern.

Andererseits werden in den o. g. Anwendungen immer öfter Bauteile aus Kunststoffen, wie PVC oder Acrylaten, eingesetzt. Um eine ausreichende Haftung auf diesen Bauteilen zu erreichen, werden den eingesetzten Dichtstoffe Haftvermittler mit basischem Stickstoff aufweisenden Gruppen zugesetzt. Das schränkt die ohnehin geringe Anzahl verwendbarer Fungizide weiter ein, da die häufig verwendeten Fungizide N-Octyl-4-isothiazolin-3-on und 4,5-Dichlor-2-n-octyl-4-isothiazolin-3-on bei gleichzeitiger Anwesenheit von basischem Stickstoff zu auffälligen Verfärbungen der Dichtmassen führen. Außerdem werden manche Fungizide durch den basischen Stickstoff gespalten, so dass sie nicht mehr wirksam sind.

Andere übliche Fungizide, wie Methylbenzimidazol-2-ylcarbamat (Carbendazim), 10,10'-Oxy-bisphenoxarsin, 2-(4-Thiazolyl)-benzimidazol, Diiodmethyl-p-tolylsulfon (Amical, vgl. z. B. EP 34 877 A), Triazolyl-Verbindungen wie Tebuconazol in Kombination mit silberhaltigen Zeolithen (vgl. z. B. EP 931 811 A und EP 640 661 A) und Benzothiophen-2-cyclohexylcarboxamid-S,S-dioxid, haben ebenfalls zum Teil erhebliche Nachteile, wie Gehalt an toxischen Schwermetallen, chemische Unbeständigkeit, Neigung zur Verfärbung, Verbot in bestimmten Ländern oder Märkten, fehlende kommerzielle Verfügbarkeit oder Kostenintensität.

Gegenstand der Erfindung sind vernetzbare Massen auf der Basis von Organosiliciumverbindungen, dadurch gekennzeichnet, dass sie Oxathiazine und/oder deren Derivate sowie basischen Stickstoff aufweisende Verbindungen enthalten.

Bei den vernetzbaren Massen handelt es sich bevorzugt um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Besonders bevorzugt handelt es sich bei den erfindungsgemäßen Massen um solche enthaltend
(A) Organosiliciumverbindung mit mindestens zwei kondensationsfähigen Gruppen,
(B) Oxathiazine und/oder deren Derivate, gegebenenfalls
(C) Vernetzer,
(D) basischen Stickstoff aufweisende Verbindungen und
(E) organische Zinnverbindungen als Katalysator.

Bei den kondensationsfähigen Gruppen, welche die eingesetzten, an der Vernetzungsreaktion beteiligten Organosiliciumverbindungen aufweisen, kann es sich um beliebige Gruppen handeln, wie Hydroxy-, Oximato- und Organyloxygruppen, insbesondere Alkoxyreste, wie Ethoxyreste, Alkoxyethoxyreste und Methoxyreste.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R"-Si≡ -Strukturen mit R" gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Bevorzugt handelt es sich bei den erfindungsgemäß eingesetzten Organosiliciumverbindungen (A) um solche enthaltend Einheiten der Formel

Rₐ(OR¹)_{b}Y_{c}SiO_{(4-a-b-c)/2}. (I),

wobei
R gleich oder verschieden sein kann und gegebenenfalls substituierte Kohlenwasserstoffreste, die durch Sauerstoffatome unterbrochen sein können, bedeutet,
R¹ gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste und Aminoxyreste bedeutet,
a 0, 1, 2 oder 3, bevorzugt 1 oder 2, ist,
b 0, 1, 2 oder 3, bevorzugt 0, 1 oder 2, besonders bevorzugt 0, ist und
c 0, 1, 2 oder 3, bevorzugt 0 oder 1, besonders bevorzugt 0, ist,
mit der Maßgabe, dass die Summe aus a+b+c kleiner oder gleich 4 ist und pro Molekül mindestens zwei kondensationsfähige Reste (OR¹) anwesend sind.

Bevorzugt ist die Summe a+b+c kleiner oder gleich 3.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z. B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Methoxyethyl-, Ethoxyethyl- und der Ethoxyethoxyethylrest.

Beispiele für zweiwertige Reste R sind Polyisobutylendiylreste und propandiylterminierte Polypropylenglykolreste.

Beispiele für Reste R¹ sind die für R angegebenen einwertigen Reste.

Bevorzugt handelt es sich bei Rest R¹ um Wasserstoffatom oder Alkylreste mit 1 bis 12 Kohlenstoffatomen, besonders bevorzugt um Wasserstoffatom, Methyl- oder Ethylrest, insbesondere um Wasserstoffatom.

Beispiele für Rest Y sind Dimethylamino-, Cyclohexylamino- und Methylethylketoximorest.

Besonders bevorzugt handelt es sich bei erfindungsgemäß eingesetzten Organosiliciumverbindungen (A) um solche der Formel

(OR¹)₃-_{f}R_{f}Si-(SiR₂-O)ₑ-SiR_{f}(OR¹)_{3-f} (II),

wobei
R und R¹ eine der oben angegebenen Bedeutungen haben,
e gleich 30 bis 3000 ist und
f gleich 1 oder 2 ist.

Vorzugsweise ist f gleich 2, wenn R¹ die Bedeutung von Wasserstoffatom hat, und f gleich 1, wenn R¹ eine Bedeutung verschieden Wasserstoffatom hat.

Beispiele für Organosiliciumverbindungen (A) sind
(MeO)₂MeSiO [SiMe₂O]₂₀₀₋₂₀₀₀SiMe (OMe)₂,
(HO) Me₂SiO [SiMe₂O]₂₀₀₋₂₀₀₀SiMe₂ (OH) ,
(EtO)₂MeSiO [SiMe₂O] ₂₀₀₋₂₀₀₀SiMe (OEt) ₂,
(HO) MeViSiO [SiMe₂O]₂₀₀₋₂₀₀₀SiMeVi (OH),
(MeO)₂ViSiO[SiMe₂O]₂₀₀₋₂₀₀₀SiVi (OMe)₂ und
(EtO)₂ViSiO[SiMe₂O]₂₀₀₋₂₀₀₀SiVi(OEt)₂,
wobei Me Methylrest, Et Ethylrest und Vi Vinylrest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Bei der erfindungsgemäß eingesetzten Komponente (B) handelt es sich bevorzugt um Oxathiazine und/oder deren Derivate der allgemeinen Formel (III) 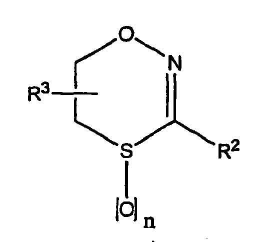 wobei
R² einen aromatischen Rest bedeutet,
R³ Wasserstoffatom oder einen einwertigen, gegebenenfalls substituierten Kohlenwasserstoffrest bedeutet und
n 0, 1 oder. 2 ist.

Beispiele für Reste R² sind der Phenyl-, Naphthyl-, Pyridinyl-, Thienyl-, Furanyl- und Benzo(b)thien-2-ylrest, die gegebenenfalls substituiert sein können.

Bevorzugt handelt es sich bei Rest R² um Benzo(b)thien-2-yl-, 4-Chlorphenyl- oder 2-Thienylreste.

Beispiele für Reste R³ sind Wasserstoffatom, Kohlenwasserstoffreste mit 1 bis 4 Kohlenstoffatomen sowie der Benzylrest, wobei Wasserstoffatom bevorzugt ist.

Beispiele für die erfindungsgemäß eingesetzten Oxathiazine und/oder deren Derivate sind 3-Benzo(b)thien-2-yl-5,6-dihydro-1,4,2-oxathiazin-4-oxid, 3-(4-Chlorphenyl)-5,6-dihydro-1,4,2-oxathiazin-4,4-dioxid und 5,6-Dihydro-3-(2-thienyl)-1,4,2-oxathiazin-4-oxid, wobei 3-Benzo(b)thien-2-yl-5,6-dihydro-1,4,2-oxathiazin-4-oxid besonders bevorzugt ist.

Oxathiazine und/oder deren Derivate (B) sind handelsübliche Produkte bzw. können nach in der Organischen Chemie gängigen Methoden hergestellt werden. Hierzu sei beispielsweise auf EP-A 715 495 verwiesen, in dem 3-Benzo(b)thien-2-yl-5,6-dihydro-1,4,2-oxathiazin-4-oxid beschrieben wird.

Die erfindungsgemäßen Massen enthalten Komponente (B) in Mengen von vorzugsweise 0,01 bis 3 Gewichtsteilen, besonders bevorzugt 0,1 bis 1 Gewichtsteilen, insbesondere 0,2 bis 0,4 Gewichtsteilen, jeweils bezogen auf 100 Gewichtsteile Organosiliciumverbindung (A).

Bei den in den erfindungsgemäßen Massen gegebenenfalls eingesetzten Vernetzern (C) kann es sich um beliebige, bisher bekannte Vernetzer mit mindestens drei kondensationsfähigen Resten handeln, wie beispielsweise Silane oder Siloxane mit mindestens drei Organyloxygruppen.

Bei den in den erfindungsgemäßen Massen gegebenenfalls eingesetzten Vernetzern (C) handelt es sich vorzugsweise um Organosiliciumverbindungen der Formel

(R⁵O)_{d}Z_{g}SiR⁴_{(4-d-g)} (V),

wobei
R⁴ gleich oder verschieden sein kann und einwertige, gegebenenfalls substituierte Kohlenwasserstoffreste, die durch Sauerstoffatome unterbrochen sein können, bedeutet,
R⁵ gleich oder verschieden sein kann und eine oben für R¹ genannte Bedeutung besitzt,
Z gleich oder verschieden sein kann und eine für Y angegebene Bedeutung hat,
d 0, 1, 2, 3 oder 4, bevorzugt 2 oder 3, besonders bevorzugt 3, ist und
g 0, 1, 2, 3 oder 4, bevorzugt 0 oder 3, besonders bevorzugt 0, ist,
mit der Maßgabe, dass die Summe d+g gleich 3 oder 4 ist, sowie deren Teilhydrolysate.

Bei den Teilhydrolysaten kann es sich dabei um Teilhomohydrolysate handeln, d. h. Teilhydrolysate von einer Art von Organosiliciumverbindung der Formel (V), wie auch um Teilcohydrolysate, d. h. Teilhydrolysate von mindestens zwei verschiedenen Arten von Organosiliciumverbindungen der Formel (V).

Handelt es sich bei den in den erfindungsgemäßen Massen gegebenenfalls eingesetzten Vernetzern (C) um Teilhydrolysate von Organosiliciumverbindungen der Formel (IV), so sind solche mit bis zu 6 Siliciumatomen bevorzugt.

Beispiele für Rest R⁵ sind die oben für Rest R¹ genannten Beispiele. Bevorzugt handelt es sich bei Rest R⁶ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Rest R⁴ sind die oben für Rest R genannten einwertigen Beispiele, wobei Kohlenwasserstoffreste mit 1 bis 12 Kohlenstoffatomen bevorzugt und der Methyl- und der Vinylrest besonders bevorzugt sind.

Beispiele für Z sind die für Y angegebenen Beispiele, wobei Methylethylketoximoreste bevorzugt sind.

Besonders bevorzugt handelt es sich bei den in den erfindungsgemäßen Massen gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl) ethan, 1,2-Bis(triethoxysilyl) ethan, Methyltris (methylethylketoximo)silan, Vinyltris(methylethylketoximo)-silan, Tetrakis-(methylethylketoximo)silan sowie Teilhydrolysate der genannten Organosiliciumverbindungen, wie z. B. Hexaethoxydisiloxan.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organopolysiloxan (A).

Bei den erfindungsgemäß eingesetzten, basischen Stickstoff aufweisenden Verbindungen (D) handelt es sich vorzugsweise um solche, ausgewählt aus der Gruppe bestehend aus Verbindungen der Formel

NR⁶₃ (VI),

wobei R⁶ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet, mit der Maßgabe, dass in Formel (VI) höchstens zwei R⁶ die Bedeutung von Wasserstoffatom haben,
aliphatischen cyclischen Aminen, wie beispielsweise Piperidin und Morpholin,
sowie Organosiliciumverbindungen mit mindestens einem basischen Stickstoff aufweisenden organischen Rest aus Einheiten der Formel

R⁷ₖA₁Si (OR⁸)ₘO_{(4-k-1-m)/2} (VII),

worin
R⁷ gleich oder verschieden sein kann und einen einwertigen, SiC-gebundenen, von basischem Stickstoff freien organischen Rest bedeutet,
R⁸ gleich oder verschieden sein kann und eine für Rest R¹ angegebene Beduetung hat,
A gleich oder verschieden sein kann und einen einwertigen, SiC-gebundenen Rest mit basischem Stickstoff bedeutet,
k 0, 1, 2, oder 3,
1 0, 1, 2, 3 oder 4 und
m 0, 1, 2 oder 3 ist,
mit der Maßgabe, dass die Summe aus k+l+m kleiner oder gleich 4 ist und pro Molekül mindestens ein Rest A anwesend ist.

Beispiele für Rest R⁶ und R⁷ sind jeweils unabhängig voneinander die für R angegebenen Beispiele für gegebenenfalls substituierte Kohlenwasserstoffreste.

Bei den gegebenenfalls substituierten Kohlenwasserstoffresten R⁶ handelt es sich vorzugsweise um solche mit 1 bis 18 Kohlenstoffatomen.

Bei Rest R⁷ handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für Rest R⁸ sind die für Rest R¹ angegebenen Beispiele.

Vorzugsweise handelt es sich bei Rest R⁸ um Wasserstoffatom, Methyl- und Ethylrest.

Beispiele für Reste A sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH (CH₂)₂NH(CH₂)₂-, cyclo-C₆H₁₁NH (CH₂)₃-, cyclo-C₆H₁₁NH (CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei A um H₂N(CH₂)₃-, H₂N(CH₂)₂NH(CH₂)₃-, H₃CNH(CH₂)₃-, C₂H₅NH(CH₂)₃- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen aus Einheiten der Formel (VII) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (VII) sind H₂N(CH₂)₃-Si(OCH₃)₃, H₂N(CH₂)₃-Si(OC₂H₅)₃, H₂N(CH₂)₃-Si(OCH₃)₂CH₃, H₂N (CH₂)₃-Si(OC₂H₅)₂CH₃, H₂N (CH₂)₂NH (CH₂)₃-Si(OCH₃)₃, H₂N (CH₂)₂NH(CH₂)₃-Si (OC₂H₅)₃, H₂N (CH₂)₂NH (CH₂)₃-Si (OCH₃)₂CH₃, H₂N (CH₂)₂NH (CH₂)₃-Si (OC₂H₅)₂CH₃, H₂N (CH₂)₂NH (CH₂)₃-Si (OH)₃, H₂N (CH₂)₂NH (CH₂)₃-Si (OH)₂CH₃, H₂N (CH₂)₂NH (CH₂)₂NH (CH₂) ₃-Si (OCH₃) ₃, H₂N (CH₂)₂NH (CH₂)₂NH (CH₂)₃-Si (OC₂H₅)₃, cyclo-C₆H₁₁NH (CH₂)₃-Si (OCH₃)₃, cyclo-C₆H₁₁NH(CH₂)₃-Si (OC₂H₅)₃, cyclo-C₆H₁₁NH (CH₂)₃-Si (OCH₃)₂CH₃, cyclo-C₆H₁₁NH (CH₂)₃-Si (OC₂H₅)₂CH₃, cyclo-C₆H₁₁NH (CH₂)₃-Si (OH)₃, cyclo-C₆H₁₁NH(CH₂)₃-Si (OH)₂CH₃, HN((CH₂)₃-Si(OCH₃)₃)₂ und HN((CH₂)₃-Si(OC₂H₅)₃)₂ sowie deren Teilhydrolysate, wobei H₂N (CH₂)₂NH(CH₂)₃-Si(OCH₃)₃, H₂N (CH₂)₂NH (CH₂)₃-Si (OC₂H₅)₃, H₂N (CH₂)₂NH(CH₂)₃-Si (OCH₃)₂CH₃, H₂N (CH₂)₂NH (CH₂)₃-Si (OC₂H₅)₂CH₃, H₂N (CH₂) ₂NH (CH₂)₃ -Si (OH)₃, H₂N (CH₂)₂NH (CH₂)₃-Si (OH)₂CH₃, cyclo-C₆H₁₁NH (CH₂)₃-Si (OCH₃)₃, cyclo-C₆H₁₁NH (CH₂)₃-Si(oC₂H₅)₃, cyclo-C₆H₁₁NH(CH₂)₃-Si (OCH₃)₂CH₃, cyclo-C₆H₁₁NH (CH₂)₃-Si(OC₂H₅)₂CH₃, cyclo-C₆H₁₁NH (CH₂)₃-Si (OH)₃ sowie cyclo-C₆H₁₁NH (CH₂)₃-Si (OH)₂CH₃ bevorzugt und H₂N (CH₂)₂NH (CH₂)₃-Si (OCH₃)₃, H₂N(CH₂)₂NH (CH₂)₃-Si (OCH₃)₂CH₃, cyclo-C₆H₁₁NH (CH₂)₃-Si (OCH₃)₃, cyclo-c₆H₁₁NH(CH₂)₃-Si (OCH₃) ₂CH₃, H₂N (CH₂)₂NH (CH₂)₃-Si (OH)₃ und H₂N (CH₂)₂NH(CH₂)₃-Si (OH)₂CH₃ sowie jeweils deren Teilhydrolysate besonders bevorzugt sind.

Falls es sich bei der Organosiliciumverbindung aus Einheiten der Formel (VII) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, 1 und m kleiner oder gleich 3 ist.

Die erfindungsgemäß einsetzbaren Organopolysiloxane aus Einheiten der Formel (VII) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane aus Einheiten der Formel (VII) sind
H₂N (CH₂) ₃-Si (OCH₃) ₂-O-Si (CH₃) (OCH₃)₂,
H₂N(CH₂)₃ -Si (OC₂H₅)₂ -O-Si (CH₃) (OCH₃)₂,
H₂N (CH₂)₃ -Si (OC₂H₅)₂ -O-Si (CH₃) (OC₂H₅)₂,
H₂N (CH₂) ₃-Si (OCH₃) (CH₃)-O-Si(CH₃) (OCH₃)₂,
H₂N (CH₂)₃ -Si (OCH₃) (CH₃) -O-Si (OCH₃)₃,
H₂N (CH₂)₃-Si (OC₂H₅) (CH₃) -O-Si (OCH₃)₃,
H₂N (CH₂)₂ NH (CH₂)₃ -Si (OCH₃)₂-O-Si (CH₃) (OCH₃)₂,
H₂N (CH₂) ₂NH(CH₂) ₃-Si (OC₂H₅) ₂-O-Si (CH₃) (OCH₃) ₂,
H₂N (CH₂) ₂NH (CH₂) ₃-Si (OC₂H₅) ₂-O-Si (CH₃) (OC₂H₅) ₂,
H₂N (CH₂) ₂NH(CH₂) ₃-Si (OCH₃) (CH₃) -O-Si (CH₃) (OCH₃) ₂,
H₂N (CH₂) ₂NH(CH₂) ₃-Si (OCH₃) (CH₃) -O-Si (OCH₃)₃,
H₂N (CH₂) ₂NH (CH₂) ₃-Si (OC₂H₅) (CH₃) -O-Si (OCH₃)₃,
cyclo-C₆H₁₁NH (CH₂) ₃-Si (OCH₃) ₂-O-Si (CH₃) (OCH₃)₂,
cyclo-C₆H₁₁NH (CH₂) ₃-Si (OC₂H₅) ₂-O-Si (CH₃) (OCH₃)₂,
cyclo-C₆H₁₁NH (CH₂) ₃-Si (OC₂H₅)₂ -O-Si (CH₃) (OC₂H₅)₂,
cyclo-C₆H₁₁NH (CH₂)₃ -Si (OCH₃) (CH₃) -O-Si (CH₃) (OCH₃)₂,
cyclo-C₆H₁₁NH (CH₂)₃ -Si (OCH₃) (CH₃) -O-Si (OCH₃)₃ und
cyclo-C₆H₁₁NH (CH₂)₃ -Si (OC₂H₅) (CH₃) -O-Si (OCH₃)₃,
H₂N (CH₂)₃ -Si (OCH₃)₂- (O-Si (CH₃)₂) ₁₋₁₀₀-O-Si (OCH₃) ₂- (CH₂)₃ NH₂,
H₂N (CH₂) ₂NH (CH₂) ₃-Si (OCH₃) ₂- (O-Si (CH₃) ₂) ₁₋₁₀₀-O-Si (OCH₃) ₂- (CH₂)₃ NH(CH₂)₂NH₂ und
cyclo-C₆H₁₁NH (CH₂) ₃-Si(OCH₃)₂-(O-Si(CH₃)₂)₁₋₁₀₀-O-Si(OCH₃)₂-(CH₂)₃ NH cyclo-C₆H₁₁ sowie deren Teilhydrolysate, wobei
H₂N (CH₂) ₃₋Si (OC₂H₅)₂-O-Si (CH₃) (OC₂H₅)₂ besonders bevorzugt ist.

Organosiliciumverbindungen aus Einheiten der Formel (VII) sind handelsübliche Produkte bzw. können nach in der Siliciumchemie gängigen Verfahren hergestellt werden.

Beispiele für Amine der Formel (VI) sind Cyclohexylamin, Triethylamin, Trioctylamin, Butylamin, Dodecylamin, Diethyl-n-propylamin, Cyclohexylmethylamin, 2-Aminoethanol, 2-Amino-n-propanal, 2-Amino-2-methyl-1-propanol, 2-Dimethylamino-2-methyl-1-propanol, N;N-Diethylethanolamin, Ethylendiamin, Cocosfettamin, Cocosfettmethylamin, N,N-Dimethylethanolamin und Anilin.

Bei Komponente (D) handelt es sich bevorzugt um Organosiliciumverbindungen aus Einheiten der Formel (VII).

Zur Herstellung der erfindungsgemäßen Zusammensetzung wird komponente (D) bevorzugt in einer solchen Menge eingesetzt, dass der Gehalt an basischem Stickstoff vorzugsweise 0,01 bis 5 Gewichtsteile, besonders bevorzugt 0,01 bis 1 Gewichtsteile, insbesondere 0,04 bis 0,5 Gewichtsteile, jeweils bezogen auf 100 Gewichtsteile Organosiliciumverbindung (A), beträgt.

Zusätzlich zu den oben beschriebenen Komponenten (A), (B), (C) und (D) können die erfindungsgemäßen Massen nun alle weiteren Stoffe enthalten, die auch bisher in durch Kondensationsreaktion vernetzbaren Massen eingesetzt worden sind, wie z. B. Katalysatoren (E), Weichmacher (F), Füllstoffe (G), Haftvermittler (H) und Additive (I).

Beispiel für Katalysatoren (E) sind alle Katalysatoren, die auch bisher in durch Kondensationsreaktion vernetzbare Massen eingesetzt werden. Beispiele für Katalysatoren (E) sind organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, wobei Di-n-butylzinndiacetat und Dibutylzinnoxid in Tetraethylsilikat-Hydrolysat bevorzugt sind und Di-n-butylzinnoxid in Tetraethylsilikat-Hydrolysat besonders bevorzugt ist.

Falls die erfindungsgemäßen Massen Katalysator (E) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A).

Beispiele für Weichmacher (F) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie zum Beispiel Paraffinöle oder Mineralöle bestehend aus naphthenischen und paraffinischen Einheiten.

Die erfindungsgemäßen Massen enthalten Weichmacher (F) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (G) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw, deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (G) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (G) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Massen eingesetzten Haftvermittler (H) sind Silane und Organopolysiloxane mit funktionellen Gruppen, wie beispielsweise solche mit Glycidoxypropyl- oder Methacryloxypropylresten sowie Tetraalkoxysilane. Falls jedoch bereits eine andere Komponente, wie etwa Siloxan (A) oder Vernetzer (C) oder Amin (D), die genannten funktionellen Gruppen aufweist, kann auf einen Zusatz von Haftvermittler verzichtet werden.

Die erfindungsgemäßen Massen enthalten Haftvermittler (H) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (I) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Mittel zur Verlängerung der Hautbildungszeit, wie Silane mit einem SiC-gebundenen Mercaptoalkylrest, zellenerzeugende Mittel, z. B. Azodicarbonamid, Hitzestabilisatoren, Scavenger, wie Si-N enthaltende Silazane oder Silylamide, Cokatalysatoren, wie Lewis- und Brönstedsäuren, z. B. Sulfonsäuren, Phosphorsäuren, Phoshorsäureester, Phosphonsäuren und Phosphonsäureester, und Thixotropiermittel, wie beispielsweise Phosphorsäureester oder Polyglykole, und organischen Lösungsmittel, wie Alkylaromaten.

Die erfindungsgemäßen Massen enthalten Additive (I) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Insbesondere bevorzugt handelt es sich bei den erfindungsgemäßen Massen um solche, die aus
(A) Organosiliciumverbindungen enthaltend Einheiten der Formel (I),
(B) Oxathiazine und/oder deren Derivate der Formel (III)
   gegebenenfalls
(C) Vernetzer der Formel (V),
(D) basischen Stickstoff aufweisende Verbindung,
(E) Katalysator,
   gegebenenfalls
(F) Weichmacher,
   gegebenenfalls
(G) Füllstoffe,
   gegebenenfalls
(H) Haftvermittler und
   gegebenenfalls
(I) Additive
   bestehen.

Bei den erfindungsgemäßen Massen handelt es sich bevorzugt um zähflüssig bis pastöse Massen.

Die erfindungsgemäßen Massen haben bei Kontakt mit einem angefeuchteten Universalindikatorpapier (z. B. Universalindikator der Fa. Merck, Deutschland mit einem Messbereich von pH 1-14) einen pH-Wert von bevorzugt 7 bis 12, besonders bevorzugt von 9 bis 11.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z. B. bei Temperaturen im Bereich von 35°C bis 135°C. Weiterhin ist es möglich, zeitweilig oder ständig unter vermindertem Druck zu mischen, wie z. B. bei 30 bis 500 hPa Absolutdruck, um flüchtige Verbindungen oder Luft zu entfernen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z. B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z. B. 10 bis 40 mm lichter Weite, z. B. von Gebäuden, Land-, Wasser- und Luftfahrzeugen, oder als Klebstoffe oder Verkittungsmassen, z. B. im Fensterbau oder bei der Herstellung von Vitrinen, sowie z. B. zur Herstellung von Schutzüberzügen, einschließlich solcher für der ständigen Einwirkung von Süß- oder Meerwasser ausgesetzte Oberflächen oder das Gleiten verhindernden Überzügen oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum biozide Wirkung zeigen.

Des Weiteren haben die erfindungsgemäßen Massen den Vorteil, dass durch die biozide Ausrüstung die Neigung zur Verfärbung sowohl der noch nicht ausgehärteten Masse als auch der ausgehärteten Formkörper äußerst gering ist.

Die erfindungsgemäßen vernetzbaren Massen haben den Vorteil, dass sie sich durch eine sehr hohe Lagerstabilität und eine hohe Vernetzungsgeschwindigkeit auszeichnen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

Eine Fungizidpaste wurde durch Dispergieren von 30 Teilen 3-Benzo[b]thien-2-yl-5,6-dihydro-1,4,2-oxathiazin 4-oxid in 70 Teilen eines trimethylsilylendblockierten Polydimethylsiloxans mit einer Viskosität von 1000 mPa·s hergestellt.

330 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa·s, 265 g eines trimethylsilylendblockierten Polydimethylsiloxans mit einer Viskosität von 1000 mPa·s, 14 g Methyltrimethoxysilan, 12,5 g eines Haftvermittlers, der hergestellt wird durch die Umsetzung von 1 Teil Aminopropyltriethoxsilan mit 1 Teil Methyltriethoxsilan-Hydrolysat mit einem Ethoxygehalt von 37 %, und 4,5 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g, 1,1 g Octylphosphonsäure, 1,4 g eines Polyethylenglykolpolypropylenglykol-copolymers mit einer Viskosität von 700 mPa·s, 2,5 g eines Zinnkatalysators, der hergestellt wird durch Umsetzung von Di-n-butylzinndiacetat und Tetraethoxysilan, und 1,64 g der oben beschriebenen Fungizidpaste vervollständigt. Zum Schluss wird durch 5 minütiges Rühren bei ca. 100 hPa die eingerührte Luft entfernt.

Die so erhaltene Masse ist standfest, farblos und transluzent und hat bei Kontakt mit einem angefeuchteten Universalindikatorpapier der Fa. Merck (Messbereich pH 1-14) einen pH-Wert von 10.

Die so erhaltene Masse wurde in eine Aluminium-Tube gefüllt, luftdicht abgeschlossen und bei 70°C gelagert. Nach 7 Tagen wurde die Probe in einer Dicke von 2 mm auf einer PE-Folie aufgetragen und bei 23°C/50 % rel. Luftfeuchtigkeit gelagert. Die Probe zeigte ein normales Aushärtungsverhalten und keinerlei Verfärbung.

Der ausgehärtete Gummi zeigte eine gute fungizide Wirkung gegenüber allen in der ISO 846 vorgeschriebenen Pilzarten.

### Beispiel 2

300 g eines Polydimethylsiloxans mit Hydroxydimethlysilyl-Endgruppen und einer Viskosität von 80 000 mPa.s, 200 g eines trimethylsilylendblockierten Polydimethylsiloxans mit einer Viskosität von 1000 mPa·s, 38,5 g Methyltris(methylethylketoximo)silan und 7,0 g Vinyltris(methylethylketoximo)silan werden in einem Planetenmischer miteinander gemischt und 10 Minuten gerührt, dann 7,0 g Aminopropyltriethoxysilan hinzugefügt und 3 Minuten weitergerührt. Anschließend wird der Ansatz durch homogenes Einmischen von 48 g pyrogener Kieselsäure mit einer spezifischen Oberfläche von 150 m²/g, 400 g eines gemahlenen und oberflächenbeschichteten Calciumcarbonates mit einem mittleren Teilchendurchmesser von 5,7 µm (käuflich erhältlich bei der Fa. Omya GmbH, D-Köln unter der Bezeichnung OMYA BLR 3), 2,3 g der in Beispiel 1 beschriebenen Fungizidpaste und 0,9 g Di-n-butylzinndiacetat vervollständigt. Zum Schluss wird durch 5 minütiges Rühren bei ca. 100 hPa die eingerührte Luft entfernt.

Die so erhaltene Masse ist standfest und weiß und hat bei Kontakt mit einem angefeuchteten Universalindikatorpapier der Fa. Merck (Messbereich pH 1-14) einen pH-Wert von 10.

Die so erhaltene Masse wurde in eine Aluminium-Tube gefüllt, luftdicht abgeschlossen und bei 70°C gelagert. Nach 7 Tagen wurde die Probe in einer Dicke von 2 mm auf einer PE-Folie aufgetragen und bei 23°C/50 % rel. Luftfeuchtigkeit gelagert. Die Probe zeigte ein normales Aushärtungsverhalten und keinerlei Verfärbung.
Der ausgehärtete Gummi zeigte eine gute fungizide Wirkung gegenüber allen in der ISO 846 vorgeschriebenen Pilzarten.

## Patentansprüche

1. Vernetzbare Massen auf der Basis von Organosiliciumverbindungen, **dadurch gekennzeichnet, dass** es sich um solche handelt, die aus
(A) Organosiliciumverbindungen enthaltend Einheiten der Formel
Rₐ(OR¹)_{b}Y_{c}SiO_{(4-a-b-c)/2} (I),
wobei
R gleich oder verschieden sein kann und gegebenenfalls substituierte Kohlenwasserstoffreste, die durch Sauerstoffatome unterbrochen sein können, bedeutet,
R¹ gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste und Aminoxyreste bedeutet,
a 0, 1, 2 oder 3 ist,
b 0, 1, 2 oder 3 ist und
c 0, 1, 2 oder 3 ist,
mit der Maßgabe, dass die Summe aus a+b+c kleiner oder gleich 4 ist und pro Molekül mindestens zwei kondensationsfähige Reste (OR¹) anwesend sind,
(B) Oxathiazine und/oder deren Derivate der Formel (III) 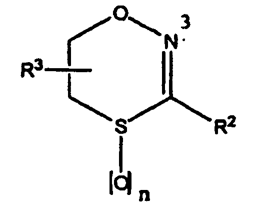 wobei
R² einen aromatischen Rest bedeutet,
R³ Wasserstoffatom oder einen einwertigen, gegebenenfalls substituierten Kohlenwasserstoffrest bedeutet und
n 0, 1 oder 2 ist,
gegebenenfalls
(C) Vernetzer der Formel
(R⁵O)_{d}Z_{g}SiR⁴_{(4-d-g)} (V),
wobei
R⁴ gleich oder verschieden sein kann und einwertige, gegebenenfalls substituierte Kohlenwasserstoffreste, die durch Sauerstoffatome unterbrochen sein können, bedeutet,
R⁵ gleich oder verschieden sein kann und eine oben für R¹ genannte Bedeutung besitzt,
z gleich oder verschieden sein kann und eine für Y angegebene Bedeutung hat,
d 0, 1, 2, 3 oder 4 ist und
g 0 ist,
mit der Maßgabe, dass die Summe d+g gleich 3 oder 4 ist, sowie deren Teilhydrolysate,
(D) basischen Stickstoff aufweisende Verbindung,
(E) organische Zinnverbindungen als Katalysator, gegebenenfalls
(F) Weichmacher,
gegebenenfalls
(G) Füllstoffe, ausgewählt aus hydrophiler pyrogener Kieselsäure und gefälltem oder gemahlenem Calciumcarbonat,
gegebenenfalls
(H) Haftvermittler und
gegebenenfalls
(I) Additive, ausgewählt aus Pigmenten, Farbstoffen, Riechstoffen, Oxidationsinhibitoren, Mitteln zur Beeinflussung der elektrischen Eigenschaften, wie leitfähiger Ruß, flammabweisend machenden Mitteln, Lichtschutzmitteln, Mitteln zur Verlängerung der Hautbildungszeit, wie Silane mit einem SiC-gebundenen Mercaptoalkylrest, zellenerzeugenden Mittel, z.B. Azodicarbonamid, Hitzestabilisatoren, Scavengern, wie Si-N enthaltende Silazane oder Silylamide, Cokatalysatoren, wie Lewis- und Brönstedsäuren, z.B. Sulfonsäuren, Phosphorsäuren, Phoshorsäureester, Phosphonsäuren und Phosphonsäureester, und Thixotropiermitteln, wie beispielsweise Phosphorsäureester oder Polyglykole, und organischen Lösungsmitteln, wie Alkylaromaten,
bestehen.

2. Vernetzbare Massen gemäß Anspruch 1, **dadurch gekennzeichnet, dass** es sich bei Komponente (B) um 3-Benzo(b)thien-2-yl-5,6-dihydro-1,4,2-oxathiazin-4-oxid handelt.

3. Vernetzbare Massen gemäß einem oder mehreren der Ansprüche 1 bis 2, **dadurch gekennzeichnet, dass** sie Komponente (B) in Mengen von 0,01 bis 3 Gewichtsteilen, bezogen auf 100 Gewichtsteile Organosiliciumverbindung (A), enthalten.

4. Vernetzbare Massen gemäß einem oder mehreren der Ansprüche 1 bis 3, **dadurch gekennzeichnet, dass** Komponente (D) in einer solchen Menge eingesetzt wird, dass der Gehalt an basischem Stickstoff 0,01 bis 5 Gewichtsteile, bezogen auf 100 Gewichtsteile Organosiliciumverbindung (A), beträgt.

5. Formkörper, hergestellt durch Vernetzung der Massen gemäß einem oder mehreren der Ansprüche 1 bis 4.

## Claims

1. Crosslinkable substances based on organosilicon compounds, **characterized in that** they are those which are composed of
(A) organosilicon compounds comprising units of the formula
Rₐ(OR¹)_{b}Y_{c}SiO_{(4-a-b-c)/2} (I),
in which
R can be identical or different and represents optionally substituted hydrocarbon radicals which can be interrupted by oxygen atoms,
R¹ can be identical or different and represents a hydrogen atom or monovalent, optionally substituted, hydrocarbon radicals which can be interrupted by oxygen atoms,
Y can be identical or different and represents a halogen atom, a pseudohalogen radical, Si-N-bonded amine radicals, amide radicals, oxime radicals and aminoxy radicals,
a is 0, 1, 2 or 3,
b is 0, 1, 2 or 3 and
c is 0, 1, 2 or 3,
with the proviso that the sum of a+b+c is less than or equal to 4 and at least two condensable radicals (OR¹) are present per molecule,
(B) oxathiazines and/or the derivatives thereof of the formula (III) 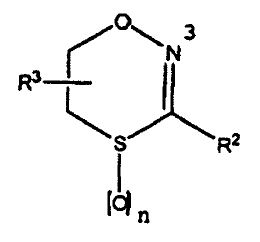 in which
R² represents an aromatic radical,
R³ represents a hydrogen atom or a monovalent, optionally substituted, hydrocarbon radical and
n is 0, 1 or 2,
if appropriate
(C) crosslinking agents of the formula
(R⁵O)_{d}Z_{g}SiR⁴_{(4-d-g)} (V),
in which
R⁴ can be identical or different and represents monovalent, optionally substituted, hydrocarbon radicals which can be interrupted by oxygen atoms,
R⁵ can be identical or different and has a meaning mentioned above for R¹,
Z can be identical or different and has a meaning given for Y,
d is 0, 1, 2, 3 or 4 and
g is 0,
with the proviso that the sum d+g is equal to 3 or 4, and also the partial hydrolysates thereof,
(D) compounds exhibiting basic nitrogen,
(E) organic tin compounds as catalyst,
if appropriate
(F) plasticizers,
if appropriate
(G) fillers, chosen from hydrophilic pyrogenic silica and precipitated or ground calcium carbonate,
if appropriate
(H) adhesives and
if appropriate
(I) additives, chosen from pigments, dyes, fragrances, oxidation inhibitors, agents for influencing the electrical properties, such as conductive blacks, flame retardants, light stabilizers, agents for extending the skinning time, such as silanes with a SiC-bonded mercaptoalkyl radical, cell-generating agents, e.g. azodicarbonamide, heat stabilizers, scavengers, such as Si-N-comprising silazanes or silylamides, cocatalysts, such as Lewis and Brönsted acids, e.g. sulfonic acids, phosphoric acids, phosphoric acid esters, phosphonic acids and phosphonic acid esters, and thixotropic agents, such as, for example, phosphoric acid esters or polyglycols, and organic solvents, such as alkylaromatic compounds.

2. Crosslinkable substances according to Claim 1, **characterized in that** component (B) is 3-(benzo[b]thien-2-yl)-5,6-dihydro-1,4,2-oxathiazine 4-oxide.

3. Crosslinkable substances according to one or more of Claims 1 to 2, **characterized in that** they comprise component (B) in amounts from 0.01 to 3 parts by weight, based on 100 parts by weight of organosilicon compound (A).

4. Crosslinkable substances according to one or more of Claims 1 to 3, **characterized in that** component (D) is used in such an amount that the content of basic nitrogen is from 0.01 to 5 parts by weight, based on 100 parts by weight of organosilicon compound (A).

5. Molded articles, prepared by crosslinking the substances according to one or more of Claims 1 to 4.

## Revendications

1. Matières réticulables à base de composés organosiliciés, **caractérisées en ce qu'**il s'agit de celles qui sont constituées
(A) de composés organosiliciés contentant des motifs de formule
Rₐ(OR¹)_{b}Y_{c}SiO_{(4-a-b-c)/2} (I),
dans laquelle
R peut être le même ou différent et représente des radicaux hydrocarbonés éventuellement substitués, qui peuvent être interrompus par des atomes d'oxygène,
R¹ peut être le même ou différent et représente un atome d'hydrogène ou des radicaux hydrocarbonés monovalents, éventuellement substitués, qui peuvent être interrompus par des atomes d'oxygène, Y peut être le même ou différent et représente un atome d'halogène, un radical pseudo-halogène, des radicaux amine liés à Si-N, des radicaux amido, des radicaux oxime et des radicaux aminoxy,
a est 0, 1, 2 ou 3,
b est 0, 1, 2 ou 3 et
c est 0, 1, 2 ou 3,
étant entendu que la somme de a+b+c est inférieure ou égale à 4 et qu'au moins deux radicaux (OR¹) aptes à la condensation sont présents par molécule,
(B) d'oxathiazines et/ou de leurs dérivés de formule (III) 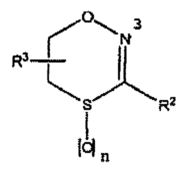 dans laquelle
R² représente un radical aromatique,
R³ représente un atome d'hydrogène ou un radical hydrocarboné monovalent, éventuellement substitué, et
n est 0, 1 ou 2,
éventuellement
(C) d'agents de réticulation de formule
(R⁵O)_{d}Z_{g}SiR⁴_{(4-d-g)} (V),
dans laquelle
R⁴ peut être le même ou différent et représente des radicaux hydrocarbonées monovalents, éventuellement substitués, qui peuvent être interrompus par des atomes d'oxygène,
R⁵ peut être le même ou différent et a une signification indiquée plus haut pour R¹,
Z peut être le même ou différent et a une signification indiquée pour Y,
d est 0, 1, 2, 3 ou 4 et
g est 0,
étant entendu que la somme d+g est égale à 3 ou 4, ainsi que de leurs produits d'hydrolyse partielle,
(D) de composés comportant de l'azote basique,
(E) de composés organiques d'étain en tant que catalyseur,
éventuellement
(F) de plastifiants,
éventuellement
(G) de charges, choisies parmi un acide silicique pyrogéné hydrophile et un carbonate de calcium précipité ou broyé,
éventuellement
(H) de promoteurs d'adhérence et
éventuellement
(I) d'additifs, choisis parmi des pigments, des colorants, des parfums, des antioxydants, des agents destinés à influer sur les propriétés électriques, tels que le noir de carbone conducteur, des agents d'ignifugation, des photoprotecteurs, des agents destinés à prolonger le temps de formation de peau, tels que des silanes comportant un radical mercaptoalkyle lié à SiC, des agents engendrant des cellules, par exemple l'azodicarbonamide, des stabilisants thermiques, des adsorbants, tels que des silylamides ou silazanes contentant un groupe Si-N, des co-catalyseurs, tels que des acides de Lewis et de Brönsted, par exemple des acides sulfoniques, des acides phosphoriques, des esters d'acide phosphorique, des acides phosphoniques et des esters d'acide phosphorique, et des agents de thixotropie, comme par exemple des esters d'acide phosphorique ou des polyglycols, et des solvants organiques, tels que des composés alkylaromatiques.

2. Matières réticulables selon la revendication 1, **caractérisées en ce que** le composant (B) consiste en 3-benzo(b)thién-2-yl-5,6-dihydro-1,4,2-oxathiazine-4-oxyde.

3. Matières réticulables selon une ou plusieurs des revendications 1 et 2, **caractérisées en ce qu'**elles contiennent le composant (B) en quantité de 0,01 à 3 parties en poids, par rapport à 100 parties en poids de composé organosilicié (A).

4. Matières réticulables selon une ou plusieurs des revendications 1 à 3, **caractérisées en ce que** le composant (D) est utilisé en une quantité telle que la teneur en azote basique vaut de 0,01 à 5 parties en poids, par rapport à 100 parties en poids de composé organosilicié (A).

5. Corps moulés, produits par réticulation des matières selon une ou plusieurs des revendications 1 à 4.
